# NEUE EUROPÄISCHE PATENTSCHRIFT

(11) **EP 1 711 777 B2**
(45) Veröffentlichungstag und Bekanntmachung des Hinweises auf die Entscheidung über den Einspruch: **12.01.2011**
(45) Hinweis auf die Patenterteilung: 14.05.2008
(21) Anmeldenummer: 05707114.4
(22) Anmeldetag: 01.02.2005
(51) Int. Cl.: G01B 11/00, G01S 5/16, B25J 9/16

(54) **VERFAHREN ZUR BESTIMMUNG DER LAGE UND DER RELATIVVERSCHIEBUNG EINES OBJEKTS IM RAUM**
METHOD FOR DETERMINING THE POSITION AND THE RELATIVE MOTION OF AN OBJECT IN A SPACE
PROCEDE POUR DETERMINER LA POSITION ET LE MOUVEMENT RELATIV D'UN OBJET DANS UN ESPACE

(30) Priorität: 03.02.2004 DE 102004005380
(43) Veröffentlichungstag der Anmeldung: 18.10.2006
(73) Patentinhaber: ISRA Vision AG, 64297 Darmstadt (DE)
(72) Erfinder: WIENAND, Stephan, 64673 Zwingenberg (DE); LAMBERT, Georg, 64285 Darmstadt (DE)
(74) Vertreter: KEIL & SCHAAFHAUSEN Patentanwälte
(86) Internationale Anmeldenummer: PCT/EP2005/000971
(87) Internationale Veröffentlichungsnummer: WO 2005/075936

(56) Entgegenhaltungen:
- WO-A-93/07443
- DE-A- 10 159 574
- DE-A- 19 812 609
- DE-A1- 3 302 177
- DE-A1- 10 026 711
- DE-A1- 10 111 729
- US-A- 4 942 539
- US-A- 5 388 059
- US-A- 5 499 306
- US-A- 5 856 844
- US-A- 6 044 183
- US-A- 2003 144 765
- PATENT ABSTRACTS OF JAPAN Bd. 017, Nr. 254 (P-1538), 19. Mai 1993 (1993-05-19) & JP 04 370704 A (TAKENAKA KOMUTEN CO LTD), 24. Dezember 1992 (1992-12-24)
- COLIN SCOTT: 'Vision-guided robot dispenses liquid gasket' OPTOIQ- GATEWAY TO THE APPLICATION OF LIGHT 01 Januar 2004,

## Beschreibung

Die Erfindung betrifft ein Verfahren zur Bestimmung der Lage eines Objekts im Raum gemäß dem Oberbegriff des Anspruchs 1, bei dem Messmerkmale des Objekts mit einer auf ein Raum-Koordinatensystem kalibrierten optischen Aufnahmeeinrichtung aufgenommen werden und anhand dieser Messmerkmale in einer Bildverarbeitungseinrichtung die Lage des Objekts in dem Raum-Koordinatensystem bestimmt wird. Derartige Verfahren finden bspw. bei Produktions- und Montagevorgängen in automatisierten Produktionsstraßen Anwendung, bei denen mittels Handhabungsgeräten ein Arbeitsvorgang an einem Fertigungsobjekt unbekannter Lage durchgeführt werden soll.

In der EP 0 911 603 B1 ist zur optischen Bestimmung der Lage eines starren Körpers in einem räumlichen Koordinatensystem beschrieben, jede aus einer Auswahl von mindestens drei auf dem starren Körper vorhandenen Linien oder Kanten, deren Bezug zum körpereigenen Koordinatensystem bekannt ist, in einem ebenen Koordinatensystem abzubilden, wobei die Lage der ebenen Koordinaten auf das räumliche Koordinatensystem bezogen ist und auf eine Zuordnung ausgezeichneter Punkte verzichtet wird. Die Kanten oder Linien werden in der Regel durch mehrere Kameras erfasst, wobei es auch möglich ist, eine in Bezug auf das räumliche Koordinatensystem kontrolliert bewegbare Kamera heranzuziehen und nacheinander mehrere Aufnahmen der Linien oder Kanten zu machen.

Dabei besteht jedoch der Nachteil, dass entweder mehrere Kameras eingesetzt und gesondert kalibriert werden müssen oder die Bestimmung der Lage des Objekts im Raum lange dauert, weil mehrere Bilder aus unterschiedlichen Positionen aufgenommen werden müssen.

Aus dem Dokument DE 101 11 729 A1 ist ein Verfahren bekannt, bei welchem eine Kamera nacheinander auf wenigstens drei auf einem Körper bestimmte Merkmale gerichtet wird und mit Hilfe der Bildkoordinaten und der bekannten körperfesten Koordinaten der Merkmale die Lage des Körpers im Raum bestimmt wird.

In dem Dokument DE 100 26 711 A1 ist ein Positionsüberwachungssystem beschrieben, bei dem mit wenigstens einem am zu überwachenden Objekt angebrachten Reflektor und einer Strahlungsquelle ein von einer Kamera detektierbares Reflexionsmuster erzeugt wird. Bei einer Positionserkennung eines in drei Dimensionen bewegten Objektes sind zwei Kameras erforderlich.

Aus der US-Patentschrift US 4,942,539 ist ein Positionsbestimmungsverfahren bekannt, bei dem mittels einer feststehenden Kamera wenigstens drei nichtkolineare geometrische Merkmale eines Objektes abgebildet werden und aus deren Bildkoordinaten mittels Referenz- und Kalibrierdaten Orientierung und Position des Objektes bestimmt werden.

Aufgabe der vorliegenden Erfindung ist es daher, eine Möglichkeit zur Bestimmung der Lage eines Körpers im Raum vorzuschlagen, die eine zuverlässige Ermittlung der Lage eines Objekts im Raum mit weniger Kameras oder Kamerapositionen zulässt. Dabei soll die Bestimmung der Lage des Objekts im Raum beschleunigt werden .

Diese Aufgabe wird bei einem Verfahren der eingangs genannten Art im Wesentlichen mit den Merkmalen des Anspruchs 1 gelöst. Dazu werden mindestens drei Messmerkmale des Objekts in einer Aufnahmeeinrichtung gleichzeitig erfasst und zur Bestimmung der Lage des Objekts herangezogen. Hierzu werden die Messmerkmale, deren Koordinaten in ihrem eigenen Koordinatensystem, insbesondere einem Objekt-Koordinatensystem, bekannt sind bzw. durch die Bildverarbeitung ermittelt werden können, in einem zweidimensionalen Koordinatensystem der Aufnahmeeinrichtung abgebildet. Da die durch die Position und Ausrichtung bestimmte Lage der Aufnahmeeinrichtung im Raum-Koordinatensystem und deren Abbildungseigenschaften bekannt ist, kann die Bildverarbeitung über an sich bekannte Auswerteverfahren eine Relation zwischen den in dem zweidimensionalen Koordinatensystem der Aufnahmeeinrichtung abgebildeten Messmerkmalen und dem Raum-Koordinatensystem herstellen. Über den bekannten Bezug der verschiedenen Messmerkmale zueinander in dem Objekt-Koordinatensystem kann dann auf die Anordnung der aufgenommenen Messmerkmale im Raum rückgeschlossen werden. Dies lässt eine Lagebestimmung des Objekts im Raum zu. Dabei können erfindungsgemäß auch Messmerkmale zu mehreren Gruppen zusammengefasst und in verschiedenen Teilmessungen erfasst werden, wobei die Koordinaten der Messmerkmale in einer Gruppe relativ zueinander bekannt sind, ohne dass die Koordinaten relativ zu Messmerkmalen anderer Gruppen ebenfalls bekannt sind. Durch Zusammenfassung der verschiedenen Teilmessungen können die Koordinaten des Gesamtkörpers mit erhöhter Genauigkeit bestimmt werden.

Bisher wurde angenommen, dass die optischen Achsen der Messeinrichtungen, mit denen die verschiedenen Messmerkmale zur Lagebestimmung aufgenommen wurden, im Raum unterschiedlich ausgerichtet sein müssen, um mathematisch stabile Lösungen der Auswertealgorithmen erreichen zu können. Dies hat es erforderlich gemacht, jedes Messmerkmal, das zur Bestimmung der Lage des Objekts im Raum herangezogen wurde, aus einer anderen Kameraposition aufzunehmen. Dies wurde entweder durch eine Vielzahl von Kameras erreicht, die an verschiedenen Orten aufgebaut und jeweils kalibriert sind, und hatte einen entsprechend großen apparativen Aufwand zur Folge. Alternativ konnte die Kamera auch nacheinander kontrolliert in verschiedene Aufnahmepositionen bewegt werden. Dies führte jedoch zu einer vergleichsweise langsamen Lagebestimmung, da alle Bilder nacheinander ausgewertet werden mussten. Mit der vorliegenden Erfindung hat sich nun herausgestellt, dass es möglich ist, mehrere Messmerkmale mit einer Kamera gleichzeitig zu erfassen und für die Lagebestimmung im Raum heranzuziehen. Dadurch wird die Geschwindigkeit bei der Bestimmung der Lage eines Objekts im Raum erheblich beschleunigt. Besonders vorteilhaft ist es dafür, wenn die verschiedenen, in einer Kamera erfassten Messmerkmale auf dem Objekt einen deutlichen, insbesondere möglichst großen Abstand aufweisen. Die erreichbare Genauigkeit hängt insbesondere von dem Abstand der Messmerkmale auf dem Objekt ab. Je nach gewünschter Genauigkeit kann daher ein bestimmter Abstand als Mindestabstand zwischen zwei Messmerkmalen vorgegeben werden.

Um die Lage eines Objekts im Raum, d. h. dessen Position und Orientierung, genau ermitteln zu können, müssen alle sechs Freiheitsgrade des Objekts bestimmt werden. Dies wird erfindungsgemäß durch Auswertung von mindestens drei Merkmalen aus einem aufgenommenen Bild erreicht. Die Bestimmung einer Objektposition und -orientierung ist also durch Auswertung von drei Messmerkmalen möglich, die in einer Aufnahme identifizierbar sind.

Mit nur drei Messmerkmalen kann jedoch kein Restfehler bestimmt werden. Bei Verwendung von vier oder mehr Messmerkmalen ist zusätzlich die Bestimmung eines Restfehlers nach einer Fehlerausgleichsrechnung möglich. Der Restfehler charakterisiert den Fehler zwischen der modellierten Geometrie und der Realität und ist daher ein Maß für die erreichte Genauigkeit. Erfindungsgemäß ist es jedoch vorgesehen, nicht mehr als fünf Messmerkmale gleichzeitig mit einer Auswerteeinrichtung zu erfassen. Auch wenn der Restfehler mit der Anzahl der Messmerkmale abnimmt, hat es sich herausgestellt, dass eine Auswertung von mehr als fünf Messmerkmalen in einem Bild bei den bekannten Auswertemethoden nicht mehr zu einer signifikanten Verbesserung des Fehlers führt. Daher kann zur Vermeidung unnötiger Auswertearbeit auf eine größere Anzahl von auszuwertenden Messmerkmalen in einem Bild einer Auswerteeinrichtung verzichtet werden.

Je nach Anwendungsfall ist es möglich bzw. ausreichend, die Bestimmung der Lage des Objektes mit weniger als sechs Freiheitsgraden durchzuführen. Dabei sind beliebige Untermengen möglich. Prinzipiell ist die Bestimmung der Lage des Objektes in sechs bis ein Freiheitsgraden möglich. Die Bestimmung von fünf und sechs Freiheitsgraden wird durch mindestens drei Messmerkmale

Gemäß einer Ausgestaltung des erfindungsgemäßen Verfahrens handelt es sich bei den Messmerkmalen insbesondere um ausgezeichnete Punkte, d. h. punktförmige Merkmale, die selbst keine Orientierung im Raum aufweisen. Eine solche Orientierung der Messmerkmale im Raum ist für die Anwendung des erfindungsgemäßen Verfahrens im Gegensatz zu vielen aus dem Stand der Technik bekannten Methoden nicht notwendig und bietet im Vergleich zu Kanten bspw. den Vorteil, dass die Position eines ausgezeichneten Punktes im Raum immer eindeutig ist. Bei einer Kante oder einer anderen geometrischen Kontur ist dagegen zunächst nicht bekannt, welcher Punkt der Kante genau erfasst ist. Das erfindungsgemäße Verfahren lässt sich jedoch auch bei Messmerkmalen anwenden, die als Kanten (mathematische Kurven, Geraden) oder sonstigen beschreibbaren geometrischen Formen ausgebildet sind, wobei sich in diesem Fall der Auswerteaufwand erhöht. Bei einer Kante kann der Winkel der Kante im Raum als zusätzliche Randbedingung verwendet werden, um die Robustheit und Stabilität des mathematischen Lösungsmodells zu erhöhen. Das Verfahren lässt sich erfindungsgemäß auch bei einer Konturauswertung mit beliebig vielen Punkten anwenden.

Obwohl das Verfahren gut mit einer einzigen Aufnahmeeinrichtung ausgeführt werden kann, können erfindungsgemäß auch mehrere Aufnahmeeinrichtungen verwendet werden. Die Anzahl sowie die Anordnung der an der Messung beteiligten Aufnahmeeinrichtungen kann dabei von der Ausdehnung und Geometrie des zu messenden Objekts sowie der erforderlichen Genauigkeit des Messergebnisses abhängig gemacht werden.

Gemäß einer vorteilhaften Ausgestaltung kann ein Messmerkmal auch in mehreren Aufnahmeeinrichtungen abgebildet werden. Damit erhöht sich im Allgemeinen die Genauigkeit des Gesamtergebnisses um den Beitrag dieses Messmerkmals, weil hierdurch eine nicht unbedingt notwendige Überbestimmung erreicht und zur Erhöhung der Genauigkeit ausgenutzt wird.

Um eine hohe Flexibilität zu erhalten, werden erfindungsgemäß eine oder mehrere insbesondere mittels eines Handhabungsgerätes bewegbare Aufnahmeeinrichtungen verwendet. Dabei können sich an einem Handhabungsgerät auch mehrere fest miteinander verbundene Kameras befinden. Durch den Einsatz eines Handhabungsgerätes ist es auch möglich, eine Aufnahmeeinrichtung nacheinander an verschiedene Messpositionen zu bringen und dort Bilder aufzunehmen. Bei diesen bewegten Handhabungseinrichtungen muss das Handhabungsgerät entweder immer die gleichen Raumpositionen anfahren, an denen die Aufnahmen stattfinden, oder die kalibrierten Koordinaten seiner eigenen Raumposition ermitteln können und an die Bildverarbeitung übergeben.

Dies kann bspw. durch eine dreidimensionale Kalibrierung der Aufnahmeeinrichtung an dem Handhabungsgerät erfolgen, so dass aufgrund der kontrollierten Bewegung des Handhabungsgerätes die Lage der Aufnahmeeinrichtung an dem Handhabungsgerät in jedem erreichbaren Bewegungszustand bekannt ist. Es ist auch möglich, die Lage der Aufnahmeeinrichtung selbsttätig durch Vermessen von Merkmalen mit bekannten Koordinaten und/oder durch den Einsatz externer Messmittel zu bestimmen. Insbesondere ist es denkbar, die bewegten Aufnahmeeinrichtungen außerhalb des eigentlichen Messraumes, an dem die Lage des Objektes zu bestimmen ist, zu kalibrieren, indem ein Kalibriermedium außerhalb dieses Messraumes angebracht ist. Dazu kann die zu kalibrierende Aufnahmeeinrichtung durch das Handhabungsgerät so bewegt werden, dass das Kalibriermedium durch die Aufnahmeeinrichtung abgebildet wird. Aus der bekannten Lage des Kalibiermediums lässt sich dann die Lage der Aufnahmeeinrichtung ermitteln und deren Kalibrierung durchführen. Dies hat den Vorteil, dass das zu vermessende Objekt vor der Kalibrierung nicht demontiert werden muss. Durch die vorbeschriebenen besonders vorteilhaften Kalibriermöglichkeiten wird erreicht, dass für eine bewegbare Aufnahmeeinrichtung nach einer Bewegung des Handhabungsgerätes die Lage des Aufnahmeeinrichtung in dem Raum-Koordinatensystem bestimmt wird. Das erfindungsgemäße Verfahren ist jedoch von der Kalibriermethode unabhängig und kann mit beliebigen Kalibrierungen eingesetzt werden.

Die Aufnahmeeinrichtung wird erfindungsgemäß derart positioniert, dass zwischen in die Aufnahmeeinrichtung fallenden Sehstrahlen, welche von verschiedenen Messmerkmalen ausgehen und zur Bestimmung der Lage des Objekts herangezogen werden, jeweils ein großer Zwischenwinkel besteht. Ein erfindungsgemäß großer Zwischenwinkel ist dann gegeben, wenn die von verschiedenen Messmerkmalen ausgehenden Sehstrahlen nicht parallel oder im Wesentlichen parallel verlaufen. Dazu ist die Aufnahmeeinrichtung so positioniert, dass die Zwischenwinkel größer als etwa 10° sind. Dies stellt keine scharfe Grenze dar, da die Größe des Zwischenwinkels die Genauigkeit des Ergebnisses bestimmt. Bei entsprechend geringeren Genauigkeitsanforderungen könnten daher auch kleinere Winkel von bspw. 5° bis 6° ausreichen. Dies gilt insbesondere dann, wenn nur wenige, bspw. ein oder zwei Zwischenwinkel, kleiner sind als die bevorzugten Zwischenwinkel von größer etwa 8° bis 10°. Entsprechende Winkelbegrenzungen gelten bei der Annäherung der Zwischenwinkel an 180°. Es hat sich erfindungsgemäß herausgestellt, dass es möglich ist, mehrere Messmerkmale mit einer Kamera zu erfassen und mit ausreichender Genauigkeit auszuwerten, wenn die Winkel zwischen den einzelnen, von diesen Messmerkmalen ausgehenden Sehstrahlen ausreichend groß sind. Dann verlaufen die verschiedenen Sehstrahlen nicht parallel bzw. nicht im Wesentlichen parallel. Die erreichbare Genauigkeit bei der Positionsbestimmung wird dabei um so höher, je größer die Zwischenwinkel zwischen den Sehstrahlen sind.

In der Praxis werden in der Regel ausreichende Genauigkeiten bei der Lagebestimmung erreicht, wenn die Zwischenwinkel zwischen den Sehstrahlen insbesondere in einem Bereich von etwa 10° und 170° liegen.

Eine optimale Genauigkeit wird erreicht, wenn die Aufnahmeeinrichtung je nach Anwendungsfall derart positioniert und/oder eingerichtet wird, dass jeweils ein möglichst großer Zwischenwinkel besteht. Dies kann bspw. durch eine Abstimmung von Aufnahmeentfernung und Brennweite des Objektivs der Aufnahmeeinrichtung erreicht werden. Zur Erzielung möglichst großer Winkel zwischen den Sehstrahlen ist der Einsatz von insbesondere kurzbrennweitigen Objektiven mit großen Öffnungswinkeln förderlich. Bei solchen Weitwinkelobjektiven sind die Variationen von Skalierungsänderungen und projektiven Verzeichnungen der Objektabbildung in der Aufnahmeeinrichtung, welche bspw. durch eine Kamera mit einem CCD-Sensor gebildet wird, in Abhängigkeit der Objektlage und Orientierung groß, wodurch die Messgenauigkeit verbessert wird. Dabei wird die Aufnahmeeinrichtung vorzugsweise so nah an dem Objekt positioniert, dass die zur Positionsbestimmung heranzuziehenden Messmerkmale gerade noch von der Aufnahmeeinrichtung erfasst werden. Dann wird die von der Aufnahmeeinrichtung angebotene sensitive Fläche, bspw. ein CCD-Chip, optimal ausgenutzt.

Entscheidend für die Anwendung des erfindungsgemäßen Verfahrens ist es, dass die Koordinaten der Messmerkmale in dem zu vermessenden Objekt zugeordneten Koordinaten, d. h. in den Objekt-Koordinatensystem, für die Bildauswertung bekannt sind und/oder durch diese ermittelt werden können. Dies kann erfindungsgemäß dadurch erreicht werden, dass die Objektdaten mit den Koordinaten der Messmerkmalen der Bildverarbeitung bspw. in Form von Konstruktionsdaten vorgegeben werden. Entsprechend einer weiteren Ausführungsform der vorliegenden Erfindung ist es auch möglich, die Koordinaten der Messmerkmale auf den Objekten zu erlernen. Dazu wird das Objekt in mehreren bekannten Lagen durch die Aufnahmeeinrichtung aufgenommen. Die aufgenommenen Bilder werden dann entsprechend ausgewertet und die Koordinaten den jeweiligen Messmerkmalen zugeordnet. Dabei kann die Bildverarbeitung bspw. alle möglichen, auf dem Objekt zur Verfügung stehenden Messmerkmale erfassen, so dass für die Bestimmung der Lage des Objektes im Raum eine Vielzahl verschiedener Messmerkmäle zur Verfügung stehen.

Gemäß einer Weiterentwicklung des erfindungsgemäßen Verfahrens werden die Auswahl der von einer Aufnahmeeinrichtung zu erfassenden Messmerkmale, die Position der Aufnahmeeinrichtung und/oder die Brennweite der Aufnahmeeinrichtung selbsttätig bestimmt. Dies bietet sich insbesondere bei bewegbaren Aufnahmeeinrichtungen an, da bei diesen der aufzunehmende Bildausschnitt des Objektes so ausgewählt werden kann, dass signifikante, für die Lagebestimmung des Objektes besonders geeignete Messmerkmale den sensitiven Bereich der Aufnahmeeinrichtung optimal abdecken. Dazu kann die Aufnahmeeinrichtung bspw. ein Testbild des Objektes machen. Die Bildverarbeitung identifiziert in diesem Testbild die erkennbaren Messmerkmale. Durch Überprüfung verschiedener Aufnahmepositionen und/oder verschiedener für die Auswertung verwendeter Messmerkmale kann dann automatisch die optimale Aufnahmeposition ermittelt werden. Ggf. kann zusätzlich auch die Brennweite des Objektives der Aufnahmeeinrichtung angepasst werden, sofern die Brennweite bei der Aufnahmeeinrichtung automatisch einstellbar ist.

Weitere Vorteile, Merkmale und Anwendungsmöglichkeiten der vorliegenden Erfindung ergeben sich auch aus der nachfolgenden Beschreibung von Ausführungsbeispielen und der Zeichnung.

Es zeigen:
- Fig. 1: schematisch die Bestimmung der Objektlage in einem Raum-Koordinatensystem mit einer stationären Aufnahmeeinrichtung;
- Fig. 2: schematisch die Bestimmung der Objektlage in einem Raum-Koordinatensystem mit einer bewegten Kamera und
- Fig. 3: schematisch die erfindungsgemäße Bestimmung der Objektlage in einem Raum-Koordinatensystem relativ zu einer Nulllage des Objekts.

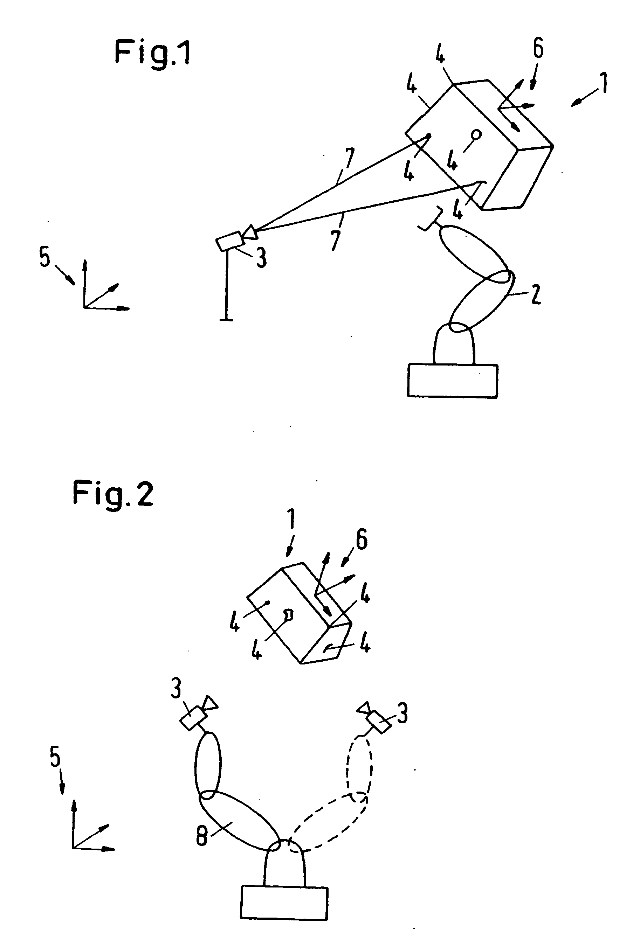

In Fig. 1 ist ein System dargestellt, mit dem ein Verfahren zur Bestimmung Lage eines Objekts 1 im Raum durchgeführt werden kann. Dieses zeigt ein Objekt 1, dessen Lage im Raum bestimmt werden soll. Diese Anforderung besteht häufig bei Produktions- und Montagevorgängen in automatisierten Produktionsstraßen, bei denen das Objekt 1 bspw. durch ein Förderband oder dgl. im Raum positioniert wird. Die Lage des Objektes 1 ist dann unbekannt. Ziel der Lagebestimmung ist es zumeist, einen Montage-, Greif- oder Bearbeitungsvorgang an einem Fertigungsobjekt 1 in unbekannter Lage durchführen zu können. Eine Montage muss dabei in der Regel immer an einem gleichen Bezugspunkt auf dem Objekt 1 stattfinden. Um dies zu erreichen, muss bei unbekannter Lage des Objektes 1 diese gemessen und ein Handhabungsgerät 2, welches das zu montierende Teil an dem Objekt 1 anbringen soll, entsprechend dem Messergebnis nachgeführt werden. Die an dem Objekt 1 durchzuführenden Aufgaben reichen u.a. vom Anbringen von Komponenten, beispielsweise Einsetzen einer Tür in eine Karosse, oder dem gezielten Aufbringen von Material, beispielsweise Klebstoffe oder Dichtungsmaterial auf einem Objekt 1, bis hin zum Durchführen von Montagebewegungen an dem Objekt, beispielsweise Verschraubung von Verbindungen, Verschweißen mechanisch vorpositionierter Teilobjekte oder dgl.. Ferner kann es beabsichtigt sein, das Objekt zu greifen, um es zu bewegen. Die Anwendung des Verfahrens ist jedoch nicht auf diese Anwendungsfälle beschränkt, sondern kann allgemein bei der Lagebestimmung eines beliebigen Körpers im Raum Verwendung finden.

Zur Bestimmung der Lage des Objektes 1 im Raum wird das Objekt 1 mit einer Aufnahmeeinrichtung 3, beispielsweise einer optischen Kamera mit einem CCD-Sensor, aufgenommen. Dabei wird das Objekt 1 mit Messmerkmalen 4 abgebildet, die für die Auswertung der Lage des Objektes 1 im Raum herangezogen werden. Bei diesen Messmerkmalen 4 kann es sich um ausgezeichnete Punkte handeln, d.h. punktförmige Merkmale, die im Raum keine Orientierung aufweisen. Ferner können geometrische Formen, wie Kreise, Striche, der Schwerpunkt eines besonders gekennzeichneten Gebietes, Objektecken oder -kanten oder sonstige Merkmale herangezogen werden, die in dem von der Aufnahmeeinrichtung 3 aufgenommenen Bild eindeutig identifiziert werden können. Wenn die Lage des Objektes 1 im Raum in sechs Freiheitsgraden, d.h. im Hinblick auf Position und Orientierung, unbekannt ist, werden mindestens drei Messmerkmale 4 zur Auswertung herangezogen, die auf dem Objekt voneinander beabstandet sind und in der einen Aufnahmeeinrichtung 3 erfasst werden.

Durch die Aufnahme der Messmerkmale 4 des Objektes 1 wird in der Aufnahmeeinrichtung 3 ein zweidimensionales Abbild des Objektes 1 mit den Messmerkmalen 4 erzeugt. In einer an die Aufnahmeeinrichtung 3 angeschlossenen, nicht gesondert dargestellten Bildverarbeitungseinrichtung wird das aufgenommene Bild dann verarbeitet. Aufgrund der dreidimensionalen Kalibrierung der Aufnahmeeinrichtung 3 in dem Raum-Koordinatensystem 5, bei dem es sich insbesondere um das Weltbezugs-Koordinatensystem handelt, und der bekannten Abbildungseigenschaften der Aufnahmeeinrichtung 3 können den Messmerkmalen 4 des Objektes 1 definierte Raumpunkte zugewiesen werden. Da gleichzeitig die Koordinaten der Messmerkmale 4 relativ zueinander in dem Objekt-Koordinatensystem 6 bekannt sind, lässt sich die Lage des Objektes 1 sowohl im Hinblick auf die Position als auch die Orientierung im Raum genau ermitteln.

Diese Informationen können verwendet werden, um das Handhabungsgerät 2 so zu steuern, dass das Objekt 1 beispielsweise an eine vorbestimmte Raumposition bewegt wird oder an dem Handhabungsgerät 2 befindliche Montagegegenstände positionsgenau an dem Objekt 1 angebracht werden.

Eine hohe Genauigkeit lässt sich trotz der Auswertung von mehreren Messmerkmalen 4 in einer Aufnahmeeinrichtung 3 dann erreichen, wenn die ausgewerteten Messmerkmale 4 auf dem Objekt 1 weit genug auseinanderliegen. In diesem Fall sind auch die Zwischenwinkel zwischen von den einzelnen Messmerkmalen 4 in die Aufnahmeeinrichtung einfallenden Sehstrahlen 7 ausreichend groß, so dass die mathematischen Auswertealgorithmen ein stabiles Positionsergebnis liefern. Dabei wird die Position der Aufnahmeeinrichtung 3 so gewählt, dass möglichst viele Sehstrahlen 7 zu für die Auswertung herangezogenen Messmerkmalen 4 einen möglichst großen Zwischenwinkel größer als etwa 10° aufweisen.

Fig. 2 zeigt ein vergleichbares System, bei dem die Aufnahmeeinrichtung 3 selbst an einem Handhabungsgerät 8 angebracht ist. In diesem Fall werden in einer ersten Aufnahmeposition der Aufnahmeeinrichtung 3, welche mit durchgezogenen Strichen dargestellt ist, ein Teil der für die Auswertung herangezogenen Messmerkmale 4 erfasst. Danach wird die Aufnahmeeinrichtung 3 in eine zweite Aufnahmeposition überführt, welche mit gestrichelten Linien dargestellt ist. In dieser zweiten Aufnahmeposition werden weitere Messmerkmale 4 aufgenommen, die für die Auswertung der Lage des Objektes 1 im Raum herangezogen werden.

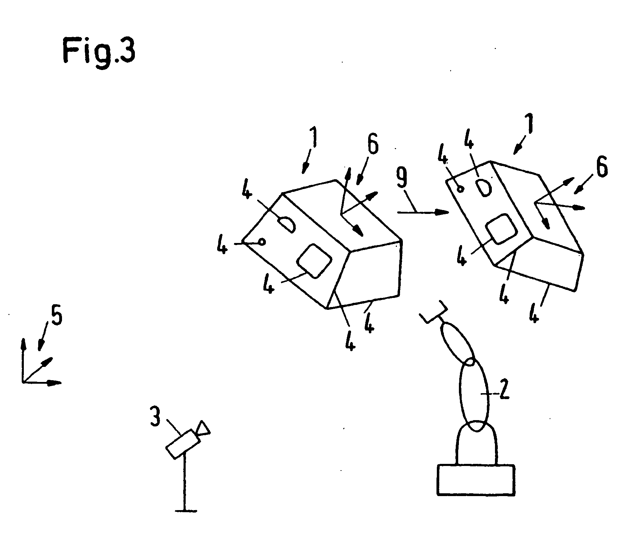

Das erfindungsgemäße Verfahren kann, wie in Fig. 3 dargestellt, auch verwendet werden, um die Relatiwerschiebung 9 eines Objektes 1 im Raum zu erfassen.

Das angewendete Prinzip ist dabei dasselbe, wie in den zuvor beschriebenen Verfahrensvarianten. Durch eine Aufnahmeeinrichtung 3 werden verschiedene Messmerkmale 4 des Objektes 1 in den verschiedenen Raumpositionen erfasst und mittels einer nicht gesondert dargestellten Bildauswertereinrichtung ausgewertet. Durch Vergleich der verschiedenen Lagen des Objektes 1 im Raum zu verschiedenen Zeitpunkten kann dann die Lage des Körpers relativ zu einer Nulllage ermittelt werden.

Der Vorteil des erfindungsgemäßen Verfahrens liegt insbesondere darin, dass mindestens drei und bis zu fünf Messmerkmale 4 gleichzeitig in einer Auswerteeinrichtung erfasst und ausgewertet werden können. Dies vereinfacht und beschleunigt die Bestimmung der Objektlage im Raum im Vergleich zu bisher bekannten Verfahren erheblich.

### Bezugszeichenliste:

- 1: Objekt
- 2: Handhabungsgerät
- 3: Aufnahmeeinrichtung
- 4: Messmerkmal
- 5: Raum-Koordinatensystem
- 6: Objekt-Koordinatensystem
- 7: Sehstrahlen
- 8: Handhabungsgerät
- 9: Relativverschiebung

## Patentansprüche

1. Verfahren zur Bestimmung der Lage und der Relativverschiebung eines Objekts (1), bei dem mindestens drei Messmerkmale (4) des Objekts (1) mit einer auf ein Raum-Koordinatensystem (5) kalibrierten optischen Aufnahmeeinrichtung (3) in einem Bild gleichzeitig aufgenommen werden und anhand dieser Messmerkmale (4) in einer Bildverarbeitungseinrichtung die Lage des Objekts (1) in dem Raum-Koordinatensystem (5) bestimmt wird, wobei eine bewegbare Aufnahmeeinrichtung (3) verwendet wird, **dadurch gekennzeichnet, dass** jeweils mindestens drei Messmerkmale (4) des Objekts (1) in verschiedenen Raumpositionen erfasst und ausgewertet werden, wobei die Position der Aufnahmeeinrichtung (3) so gewählt wird, dass für die Lagebestimmung des Objekts (1) geeignete Messmerkmale (4) den sensitiven Bereich der Aufnahmeeinrichtung optimal abdecken, indem die Zwischenwinkel der Sehstrahlen (7) von den Messmerkmalen (4) zu der Aufnahmeeinrichtung (3) größer als 10° sind, wobei nicht mehr als fünf Messmerkmale (4) gleichzeitig in einer Auswerteeinheit erfasst und ausgewertet werden, und dass für die durch ein Handhabungsgerät (8) bewegte Aufnahmeeinrichtung (3) an dem Handhabungsgerät (8) nach einer Bewegung die Lage der Aufnahmeeinrichtung (3) in dem Raum-Koordinatensystem (5) bestimmt wird, indem aufgrund der kontrollierten Bewegung des Handhabungsgeräts (8) die Lage der Aufnahmeeinrichtung (3) in jedem erreichbaren Bewegungszustand bekannt ist.

2. Verfahren nach Anspruch 1, **dadurch gekennzeichnet, dass** es sich bei den Messmerkmalen (4) um ausgezeichnete Punkte handelt.

3. Verfahren nach einem der vorhergehenden Ansprüche, **dadurch gekennzeichnet, dass** mehrere Aufnahmeeinrichtungen (3) verwendet werden.

4. Verfahren nach Anspruch 3, **dadurch gekennzeichnet, dass** ein Messmerkmal (4) in mehreren Aufnahmeeinrichtungen (3) abgebildet wird.

5. Verfahren nach einem der vorhergehenden Ansprüche, **dadurch gekennzeichnet, dass** der Zwischenwinkel zwischen etwa 10° und etwa 170° liegt.

6. Verfahren nach einem der vorhergehenden Ansprüche, **dadurch gekennzeichnet, dass** die Aufnahmeeinrichtung (3) derart positioniert und/oder eingerichtet wird, dass jeweils ein möglichst großer Zwischenwinkel besteht.

7. Verfahren nach einem der vorhergehenden Ansprüche, **dadurch gekennzeichnet, dass** vor Anwendung des Verfahrens die Koordinaten der Messmerkmale (4) in einem Objekt-Koordinatensystem (6) erlernt werden; indem das Objekt (1) in mehreren bekannten Lagen durch die Aufnahmeeinrichtung (3) aufgenommen wird.

8. Verfahren nach einem der vorhergehenden Ansprüche, **dadurch gekennzeichnet, dass** die Auswahl der von einer Aufnahmeeinrichtung (3) zu erfassenden Messmerkmale, die Position der Aufnahmeeinrichtung (3) und/oder die Brennweite der Aufnahmeeinrichtung (3) selbsttätig bestimmt werden.

## Claims

1. Method for determining the position and the relative displacement of an object (1), in which at least three measurement features (4) of the object (1) are simultaneously recorded in an image by an optical photographic device (3) calibrated onto a spatial system of coordinates (5) and the position of the object (1) in the spatial system of coordinates (5) is determined by means of these measurement features (4) in an image processing device, wherein a moveable photographic device (3) is used, **characterised in that** in each case at least three measurement features (4) of the object (1) in different spatial positions are recorded and evaluated, wherein the position of the photographic device (3) is chosen so that for determining the position of the object (1) suitable measurement features (4) optimally cover the sensitive area of the photographic device by the intermediate angle of the rays (7) from the measurement features (4) to the photographic device (3) being greater than 10°, wherein no more than five measurement features (4) are recorded and evaluated in an evaluation unit at the same time, and **in that** for the photographic device (3) moved by a handling device (8), following a movement, the position of the photographic device (3) in the spatial system of coordinates (5) is determined on the handling device (8), **in that** the position of the photographic device (3) in each achievable movement state is known on account of the monitored movement of the handling device (8).

2. Method according to Claim 1, **characterised in that** the measurement features (4) are marked points.

3. Method according to any one of the preceding claims, **characterised in that** a plurality of photographic devices (3) are used.

4. Method according to Claim 3, **characterised in that** one measurement feature (4) is imaged in a plurality of photographic devices (3).

5. Method according to any one of the preceding Claims, **characterised in that** the intermediate angle is between roughly 10° and roughly 170°.

6. Method according to any one of the preceding claims, **characterised in that** the photographic device (3) is positioned and/or set up in such a manner that in each case the largest possible intermediate angle exists.

7. Method according to any one of the preceding claims, **characterised in that** prior to the application of the method, the coordinates of the measurement features (4) in an object system of coordinates (6) are learnt by the object (1) being photographed in a plurality of known positions by the photographic device (3).

8. Method according to any one of the preceding claims, **characterised in that** the selection of the measurement features to be recorded by a photographic device (3), the position of the photographic device (3) and/or the focal length of the photographic device (3) are automatically determined.

## Revendications

1. Procédé destiné à déterminer la position et le déplacement relatif d'un objet (1) dans l'espace, dans lequel au moins trois caractéristiques de mesure (4) de l'objet (1) sont enregistrées simultanément dans une image avec un dispositif d'enregistrement optique (3) calibré sur un système de coordonnées dans l'espace (5) et, en s'appuyant sur ces caractéristiques de mesure (4), la position de l'objet (1) dans le système de coordonnées dans l'espace (5) étant définie dans un dispositif de traitement d'image, un dispositif d'enregistrement mobile (3) étant utilisé, **caractérisé en ce que** respectivement au moins trois caractéristiques de mesure (4) de l'objet (1) dans différentes positions spatiales sont détectées et analysées, la position du dispositif d'enregistrement (3) étant sélectionnée de sorte que, pour déterminer la position de l'objet (1), des caractéristiques de mesure (4) appropriées couvrent de manière optimale la plage sensitive du dispositif d'enregistrement, **en ce que** les angles intermédiaires des rayons visuels (7) entre les caractéristiques de mesure (4) et le dispositif d'enregistrement (3) sont supérieurs à 10°, et pas plus de cinq caractéristiques de mesure (4) sont détectées et analysées simultanément dans un dispositif d'analyse, et **en ce que** la position du dispositif d'enregistrement (3) dans le système de coordonnées dans l'espace (5) est déterminée pour le dispositif d'enregistrement (3), déplacé par l'appareil de manipulation (8), sur l'appareil de manipulation (8) après un déplacement du fait que, compte tenu du déplacement contrôlé de l'appareil de manipulation (8), la position du dispositif d'enregistrement (3) est connue dans chaque état de déplacement qui peut être obtenu.

2. Procédé selon la revendication 1, **caractérisé en ce que** les caractéristiques de mesure (4) sont des points formatés.

3. Procédé selon l'une quelconque des revendications précédentes, **caractérisé en ce que** plusieurs dispositifs d'enregistrement (3) sont utilisés.

4. Procédé selon la revendication 3, **caractérisé en ce qu'**une caractéristique de mesure (4) est reproduite dans plusieurs dispositifs d'enregistrement (3).

5. Procédé selon l'une quelconque des revendications précédentes, **caractérisé en ce que** l'angle intermédiaire est compris entre approximativement 10° et approximativement 170°.

6. Procédé selon l'une quelconque des revendications précédentes, **caractérisé en ce que** le dispositif d'enregistrement (3) est positionné et/ou aménagé de telle sorte que respectivement un angle intermédiaire le plus grand possible est présent.

7. Procédé selon l'une quelconque des revendications précédentes, **caractérisé en ce que**, avant d'utiliser le procédé, les coordonnées des caractéristiques de mesure (4) sont acquises dans un système de coordonnées d'objet (6), **en ce que** l'objet (1) est enregistré dans plusieurs positions connues par le dispositif d'enregistrement (3).

8. Procédé selon l'une quelconque des revendications précédentes, **caractérisé en ce que** le choix des caractéristiques de mesure devant être détectées par un dispositif d'enregistrement (3), la position du dispositif d'enregistrement (3) et/ou la distance focale du dispositif d'enregistrement (3) sont déterminés automatiquement.
